Europäisches Patentamt

European Patent Office

Office européen des brevets

(11) Publication number : **0 443 523 B1**

# EUROPEAN PATENT SPECIFICATION

(45) Date of publication of patent specification :
**02.02.94 Bulletin 94/05**

(51) Int. Cl.⁵ : **G11B 5/716, G11B 5/706,
G11B 5/66, G11B 5/68**

(21) Application number : **91102353.9**

(22) Date of filing : **19.02.91**

(54) **Magnetic recording medium.**

(30) Priority : **20.02.90 JP 39488/90**

(43) Date of publication of application :
**28.08.91 Bulletin 91/35**

(45) Publication of the grant of the patent :
**02.02.94 Bulletin 94/05**

(84) Designated Contracting States :
**DE GB**

(56) References cited :
**DE-A- 3 835 613
PATENT ABSTRACTS OF JAPAN, unexamined
applications, P field, vol. 13, no. 197, May 11,
1989 THE PATENT OFFICE JAPANESE GOV-
ERNMENT page 124 P 868
PATENT ABSTRACTS OF JAPAN, unexamined
applications, P field, vol. 9, no. 281, November
8, 1985 THE PATENT OFFICE JAPANESE GOV-
ERNMENT page 166 P 403
PATENT ABSTRACTS OF JAPAN, unexamined
applications, P field, vol. 10, no. 190, July 4,
1986 THE PATENT OFFICE JAPANESE GOV-
ERNMENT page 40 P 474**

(73) Proprietor : **KONICA CORPORATION
26-2, Nishi-shinjuku 1-chome Shinjuku-ku
Tokyo 163 (JP)**

(72) Inventor : **Kawahara, Setsuko, Konica
Corporation
1 Sakura-machi, Hino-shi
Tokyo (JP)**
Inventor : **Yamauchi, Yasuhisa, Konica
Corporation
1 Sakura-machi, Hino-shi
Tokyo (JP)**
Inventor : **Nakano, Yasushi, Konica
Corporation
1 Sakura-machi, Hino-shi
Tokyo (JP)**
Inventor : **Shimizu, Yuji, Konica Corporation
1 Sakura-machi, Hino-shi
Tokyo (JP)**

(74) Representative : **Henkel, Feiler, Hänzel &
Partner
Möhlstrasse 37
D-81675 München (DE)**

## Description

### FIELD OF THE INVENTION

The present invention relates to a magnetic recording medium such as a magnetic tape, a magnetic sheet, or a magnetic disc.

### BACKGROUND OF THE INVENTION

Generally, a magnetic recording medium such as a magnetic tape is produced by coating and drying on a support a magnetic composition comprising a magnetic powder, a binder resin and other components.

A conventional magnetic recording medium normally has a single magnetic layer. With respect to a video tape, a monolayer recording medium as described above, the present inventors obtained the following findings.

The following were found with respect to the relationship between the diffraction peak position (peak of X-ray intensity) obtained by subjecting the video tape described above to X-ray diffraction wherein a copper $K\alpha$ characteristic X-ray (wavelength $\lambda = 1.5405$ Å) is irradiated to cause lattice scattering and the Bragg angle $2\theta$. The methods used to determine the transfer property, luminescence S/N, chromatic S/N, and rubbing noise are described in Examples below.

(1) When $2\theta$ is great ($2\theta \geqq 62.80°$), an excellent transfer property and a good luminescence S/N (L-S/N) are obtained.

(2) When $2\theta$ is small ($2\theta \leqq 62.70°$), a good chromatic S/N (C-S/N) is obtained, but the L-S/N and transfer property are poor.

(3) When $2\theta$ is in a particular range (for example, $2\theta = 62.75°$), the transfer property, C-S/N and L-S/N are relatively good, but the sliding noise shows significant deterioration.

(4) A monolayer magnetic layer offers relatively good running durability.

### SUMMARY OF THE INVENTION

The object of the present invention is to provide a magnetic recording medium which offers improved running durability as well as good performance in lowered transfer property, chromatic S/N, and other features.

The present invention relates to a magnetic recording medium comprising a support and a magnetic recording layer unit provided thereon, the unit including a first layer being arranged at the position closest to the support and having a binder and a first magnetic powder comprising an iron oxide represented by FeOx in which x has a value of from 1.33 to 1.50; and a second layer being arranged at the furthest position from the support and having a binder and a second magnetic powder comprising an iron oxide represented by FeOx, in which x has a value of from 1.33 to 1.50, and a property of the first magnetic powder is different from that of the second magnetic powder, so that the X-ray diffraction spectrum of the magnetic recording layer unit has a peak within the range of Bragg angle $2\theta$ of from 62.60 degree to 62.80 degree and the peak of X-ray diffraction spectrum has a half value width within the range of from 0.460 degree to 0.600 degree. In the above-mentioned, the property is, for example, coercive force, specific surface area represented by BET value, long-axis length, axis ratio and water content of the magnetic powder, and kind or amount of an element added to the magnetic powder.

### BRIEF DESCRIPTION OF THE DRAWINGS

The present invention is illustrated by means of the drawings in which;

Figure 1 is an X-ray diffraction spectrum of a multiple-layered tape,

Figures 2 and 3 are cross-sectional views of an example magnetic recording medium,

Figure 4 is a diagram showing the principle of X-ray diffraction,

Figure 5 is an oblique view of a sample,

Figures 6 and 7 are X-ray diffraction spectra of respective monolayer tapes,

Figure 8 is an X-ray diffraction spectrum of the reference sample,

Figure 9 is a schematic diagram of a magnetic recording medium producing apparatus,

Figures 10 (A), (B), and (C) are schematic diagrams of respective extrusion coaters, and

Figure 11 is a schematic diagram of a measuring method for transfer property.

## DETAILED DESCRIPTION OF THE INVENTION

The present inventors found that with respect to a recording medium having not a monolayer magnetic layer but a number of magnetic layers, the transfer property, chromatic S/N, luminescence S/N, sliding noise and running durability are all improved by making a setting of the X-ray diffraction with copper $K\alpha$ characteristic X-ray (wavelength $\lambda = 1.5405$ Å) described above (the same applies below) so that the diffraction peak is located in the range: $62.60° \leqq 2\theta \leqq 62.80°$,

and the spectral half-value width d of the diffraction peak, i.e., the spectral width obtained at the median between the maximum spectral value and the reference level or minimum value satisfies the requirement: $0.460° \leqq d \leqq 0.600°$. In this case, the plurality of magnetic layers permits the formation of an uppermost layer that offers excellent RF output and high durability, which ensures sufficient running durability in repeated running and which reduces RF output deterioration.

In the setting above, it is preferable that $2\theta$ be from 62.60° to 62.77° and d be from 0.470° to 0.590°, more preferably $2\theta = 62.62°$ to 62.75° and d = 0.475° to 0.580°.

In the present invention, the peak position and half-value width for X-ray diffraction spectrum can vary depending upon various factors such as the Hc value and BET specific surface area of magnetic powder, the magnetic powder content in the magnetic layer, and the thickness of the magnetic layer, but they quite largely depend on the $Fe^{2+}/Fe^{3+}$ ratio in the magnetic powder. Accordingly, the diffraction peak position described above can preferably be controlled by varying the $Fe^{2+}/Fe^{3+}$ ratio in the magnetic powder composition, i.e., the ratio of FeO to $Fe_2O_3$. For example, the $2\theta$ and d values described above can be controlled by selecting an x value for Co-containing $FeO_x$ magnetic powder. The $2\theta$ and d values described above can also be controlled by using two or more kinds of magnetic powder and selecting a mixing ratio thereof or selecting a film thickness for each magnetic layer. In the present invention, it is preferable to use a magnetic powder based mainly on an iron oxide having an x value of 1.34 to 1.44, preferably 1.36 to 1.42, more preferably 1.36 to 1.40, for the lowermost layer, and another magnetic powder based mainly on an iron oxide having an x value of 1.45 to 1.48 for the uppermost layer.

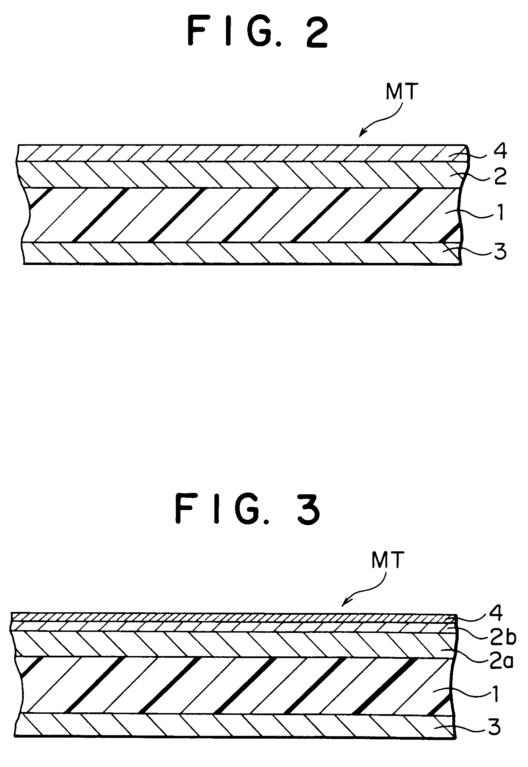

The magnetic recording medium of the present invention comprises a first magnetic layer or lower layer 2 and a second magnetic layer or uppermost layer 4, laminated in this order on a nonmagnetic support 1 comprising polyethylene terephthalate, for instance, as illustrated in Figure 2. Also, on the support's face opposite to this laminated face is formed a backcoat layer 3. An overcoat layer may be formed on the second magnetic powder. In the example given in Figure 3, the lower layer is further divided into layers 2a and 2b.

In the magnetic recording medium MT illustrated in Figures 2 and 3, it is preferable that the thickness of the first magnetic layer 2 and that of the magnetic layers 2a + 2b be 1.5 to 4.0 $\mu$m, and the thickness of the second magnetic layer 4 be not greater than 1.0 $\mu$m, e.g., 0.5 $\mu$m.

Since such a recording medium has a plurality of magnetic layers, it permits the formation of respective layers so that an upper layer offers good recording and reproduction properties for high frequency signals such as video output and a lower layer offers good recording and reproduction properties for relatively low frequency signals such as chromatic output and audio output. This can be accomplished by making the coercive force (Hc) of an upper layer, particularly the uppermost layer, exceed that of a lower layer, and the upper layer is thin. In some cases, there is a clear border between the two layers described above. It should be noted, however, that there may also be a border region wherein the magnetic powders of both layers coexist with a constant thickness in other cases. In the present invention, such a border region is excluded from the definition of each layer described above.

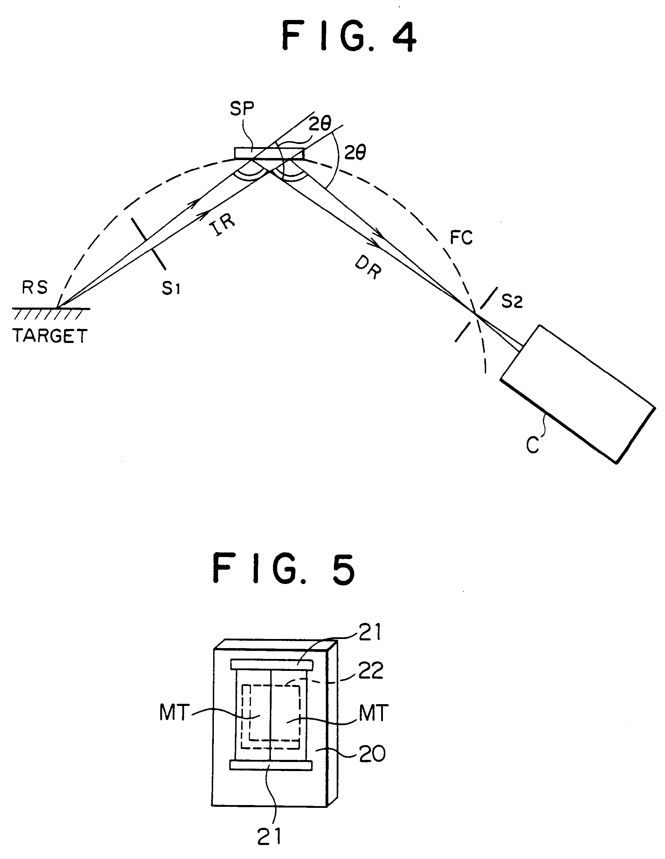

The values of $2\theta$ and d described above according to the present invention can be measured as illustrated in Figures 4 and 5.

In Figure 4, it is assumed that there is a focusing circle (Rowland circle) FC. A sample SP having a curved surface in contact with this focusing circle is subjected to diffraction wherein an X-ray generated from an X-ray source RS on the focusing circle is irradiated into the sample SP through a slit S1 as shown by IR. The diffracted X-ray DR from the sample concentrates on a point on the focusing circle, where a light receiving slit S2 is placed. A Goniometer is used to meet the concentrating conditions at any $2\theta$ (Bragg-Brentano concentration method). The intensity of the concentrated X-ray is measured using a counter C. The measurement can be achieved, for example, by using the X-ray diffraction apparatus JDX-11RA, produced by JEOL, Ltd., and $CuK\alpha$ ray. The sample SP, one of the two video tapes MT constituted as described above, is set vertically on an aluminum sample holder 20 with adhesive tape 21 while keeping in the longitudinal direction. A powder sample was set on a glass holder. Each tape was made to face a window 22 in the holder 20, the magnetic layer face of the tape in this window corresponds to the X-ray incidence surface of Figure 4.

Example measuring conditions are 40 kV, 150 mA, $2\theta = 61.6°$ to 64°, and step angle = 0.01°.

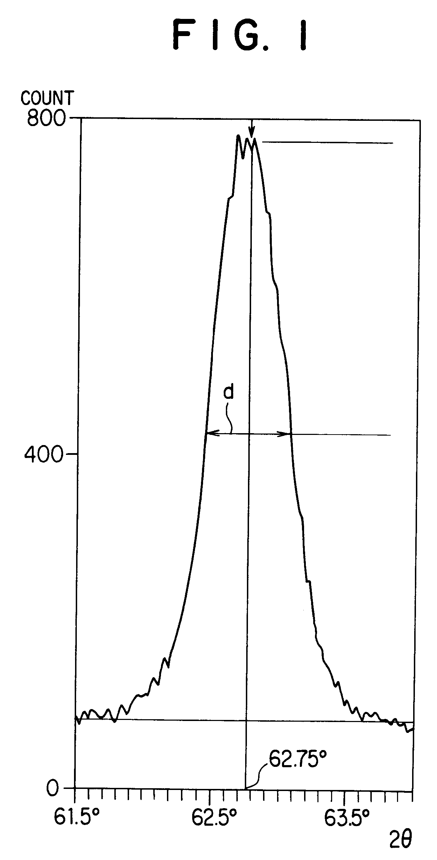

Figure 1 is an example diffraction spectrum obtained by X-ray diffraction of a double layered tape prepared in accordance with the present invention, showing that the diffraction peak is located at a Bragg angle $2\theta$ of 62.75° and its half-value width d is 0.581°. The magnetic powder used was Co-adhered $\gamma$-$Fe_2O_3$, a Co-adhered FeOx having an x value of nearly 1.50 in the upper layer, layer 4 in Figure 2, or Co-adhered $Fe_3O_4$, a Co-adhered FeOx having an x value of nearly 1.33 in the lower layer, layer 2 in Figure 2.

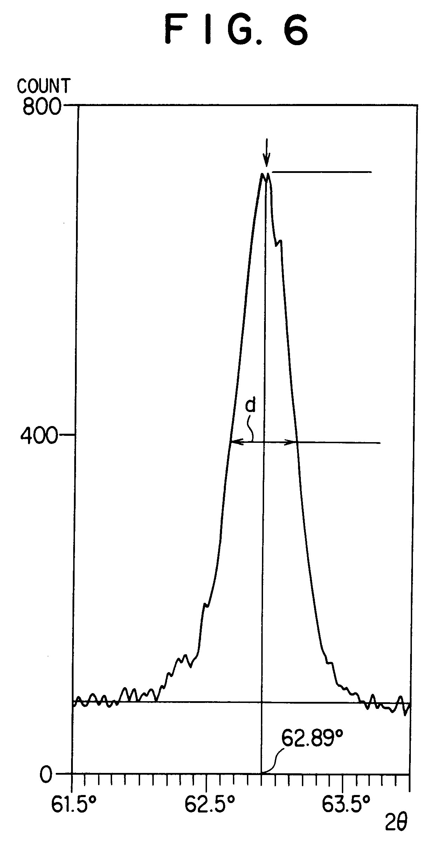

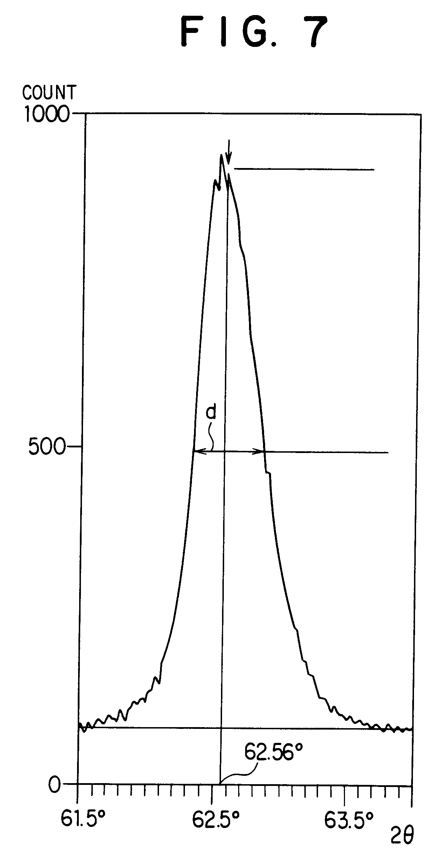

On the other hand, the samples having a single magnetic layer yielded the X-ray diffraction spectra given in Figures 6 and 7. Figure 6 is an X-ray diffraction spectrum of a single magnetic layer incorporating a Co-adhered $\gamma$-$Fe_2O_3$ magnetic powder, showing that the diffraction peak is located at $2\theta = 62.89°$ and its half-value width d is 0.437°, both of which values fall out of the range according to the present invention. Figure 7 is an X-ray diffraction spectrum of a single magnetic layer incorporating a Co-adhered $Fe_3O_4$ magnetic powder, showing that the diffraction peak is located at $2\theta = 62.56°$ and its half-value width d is 0.458°, both of which fall out of the range according to the present invention.

The measuring conditions used for the two examples given below are as follows:

Target:          Cu
Step angle:       0.010°
Counting time:    2.0 sec
Tube voltage:     40.0 kV
Tube current:     150.0 mA

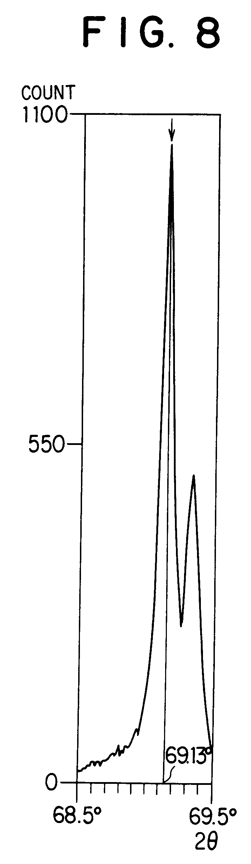

In each X-ray diffraction spectrometric determination described above, elemental silicon was used as the reference sample, and its diffraction peak was confirmed as located at $2\theta = 69.12°$ to 69.14°, as shown in Figure 8, before and after the spectrometry. The measuring conditions used are the same as above except that the step angle was 0.002° and the counting time was 0.5 sec.

The diffraction spectra described above demonstrate that the peak position obtained with a single magnetic layer incorporating a $\gamma$-$Fe_2O_3$ or $Fe_3O_4$ magnetic powder is greater (in the case of $\gamma$-$Fe_2O_3$) or smaller (in the case of $Fe_3O_4$) than the range according to the present invention, and that the multiple layered magnetic layer of the present invention, in which $\gamma$-$Fe_2O_3$ is used for the upper layer and $Fe_3O_4$ is used for the lower layer, makes the peak located between the above two. Also evident is that the half-value width d of peak position also changes, or increases, in the multiple layered magnetic layer of the present invention.

Examples of magnetic powders suitably used in the magnetic layers of the invention include magnetic powders of iron oxides such as Co-containing or Co-adhered FeOx having an x value of 1.33 to 1.50. Out of these magnetic powders, any one suitable to each of the magnetic layers 2, 2a, 2b and 4 described above can be selected. For example, use of a magnetic powder having a coercive force (Hc) exceeding that of the magnetic powder for the lower layer 2 in the upper layer 4 permits obtainment of a recording medium with high output, making the peak position and half-value width obtained by the X-ray diffraction described above fall in the range of the present invention.

Each magnetic layer may contain a lubricant e.g., silicone oil, graphite, molybdenum disulfide, tungsten disulfide, a monobasic fatty acid having a carbon atom number of 12 to 20 such as stearic acid, a fatty acid ester having a total carbon atom number of 13 to 40, a dispersing agent e.g., lecithin, a polishing agent e.g., fused alumina, an antistatic agent e.g., carbon black, and other additives.

The binder used in the magnetic layers preferably has an average molecular weight of about 10,000 to 200,000. Examples of such binders include vinyl chloride-vinyl acetate copolymers, vinyl chloride-vinylidene chloride copolymers, vinyl chloride-acrylonitrile copolymers, polyvinyl chloride, urethane resins, butadiene-acrylonitrile copolymers, polyamide resins, polyvinyl butyral, cellulose derivatives such as cellulose acetate butyrate, cellulose diacetate, cellulose triacetate, cellulose propionate or nitrocellulose, styrene-butadiene copolymers, polyester resins, various synthetic rubbers, phenol resins, epoxy resins, urea resins, melamine resins, phenoxy resins, silicone resins, acrylic reactive resins, high molecular polyester resin-isocyanate prepolymer mixtures, polyester polyol-polyisocyanate mixtures, urea formaldehyde resins, low molecular glycol/high molecular diol/isocyanate mixtures, and mixtures thereof.

It is preferable that the binder be a resin containing a hydrophilic polar group such as $-SO_3M$, $-COOM$ or $-PO(OM')_2$ in which M represents hydrogen or an alkali metal such as lithium, potassium or sodium; M' represents hydrogen, an alkali metal such as lithium, potassium or sodium or a hydrocarbon residue. Such a resin, by the action of the polar group present in its molecule, shows improved compatibility with magnetic powder, which enhances the dispersibility of the magnetic powder and prevents the aggregation of the magnetic powder to further improve the coating solution stability, which in turn improves the durability of the recording medium.

Such a binder, particularly a vinyl chloride copolymer, can be obtained by copolymerizing a vinyl chloride monomer, and a copolymerizable monomer having an alkali salt of sulfonic or phosphoric acid, and, if necessary, another copolymerizable monomer. Since the resulting copolymer is a vinyl synthetate, its synthesis is easy and various copolymer components can be selected so that it is possible to optimize the copolymer properties.

It is preferable that the sulfonic or phosphoric acid contained in the copolymer is in a form of a salt with an alkali metal, particularly sodium, potassium, or lithium.

Also, the back coat layer 3 preferably incorporates the binder described above, carbon black, and, as the case may be, nonmagnetic grains of barium sulfate or another substance, and is coated on the back face of the support.

Examples of the material for the support 1 described above include plastics such as polyethylene terephthalate and polypropylene; metals such as Aℓ and Zn; and ceramics such as glass, BN, Si carbide, porcelain and china.

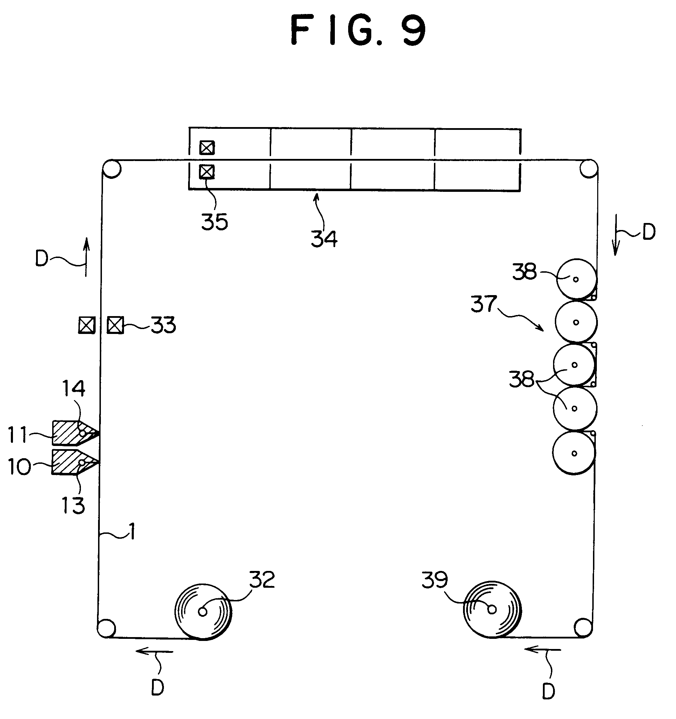

An example of the producing apparatus for the recording medium described above is given in Figure 9.

In producing the recording medium of Figure 2 using this apparatus, the film-shaped support 1, supplied from the supply roll 32, is first coated with coating compositions for the magnetic layers 2 and 4 described above by extrusion coaters 10 and 11, after which the magnetic particles in the coated layers are oriented by a 2000-Gauss orienting magnet 33, the support with the layers further introduced into a drier 34 equipped with a 2000-Gauss orienting magnet 35, where it is dried by hot blow from upper and lower nozzles. Next, the dried support 1, with the coated layers, is introduced into a supercalenderer 37 comprising a combination of calender roll 38, where it is calendered and then wound up around a winding roll 39. Each coating composition may be supplied to the extrusion coaters 10 and 11 through an unillustrated in-line mixer. In the figure, the arrow D indicates the direction of transport of the nonmagnetic base film. The extrusion coaters 10 and 11 are equipped with liquid reservoirs 13 and 14, respectively, and the coating composition from each coater is layered by the wet-on-wet method. To produce the recording medium of Figure 3, one more extrusion coater is added to the apparatus of Figure 9.

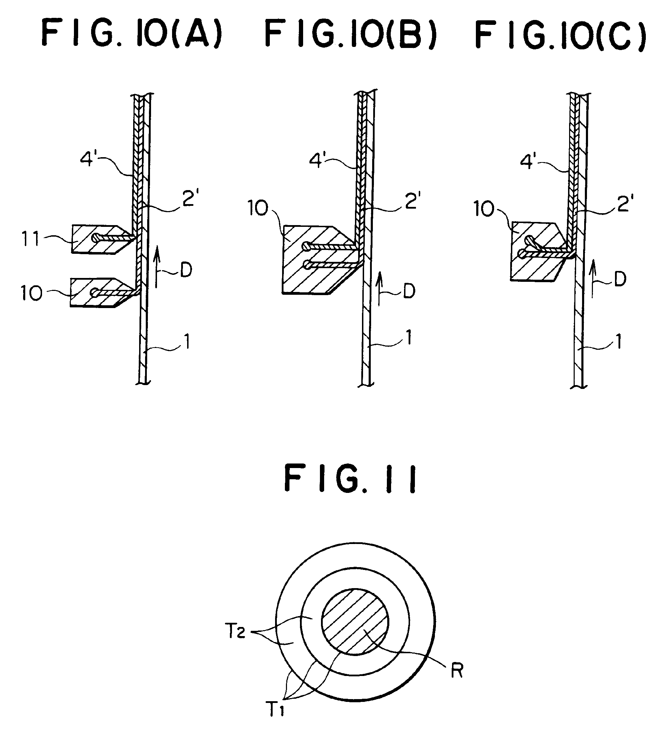

Figure 10 shows example extrusion coaters, in which (A) is the same as illustrated in Figure 9, with two heads, for serial wet-on-wet coating, (B) is a single-head type for serial wet-on-wet coating, and (C) is a single-head type wherein both magnetic coating compositions 2' and 4' are simultaneously discharged in the head in the direction of crossing for simultaneous wet-on-wet coating.

Since the methods described above are based on the wet-on-wet method, it is easy to coating an upper layer on a lower layer, and it is possible to uniformly coat a thin uppermost layer, so that a plurality of layers can be layered with good reproducibility.

The apparatus used for the multiple layer coating described above should not necessarily be an extrusion coater; any other known coating apparatus may be used.

EXAMPLES

The present invention is hereinafter described in more detail by means of the following working examples and comparative examples.

In the examples given below, "part(s)" means part(s) by weight without exception.

Comparative Examples 1 through 5

Single layer video tapes were prepared as follows:

<Magnetic paint>

| | |
|---|---|
| Co-containing FeOx | |
| (for the Hc, BET value and x value, | |
| see Table 1 below) | 100 parts |
| Sulfonate modified vinyl chloride-vinyl | |
| acetate-vinyl alcohol copolymer | |
| (MR110, produced by Nippon Zeon) | 15 parts |
| Potassium sulfonate modified polyurethane | |
| resin | |
| (UR-8300, produced by Toyobo Corporation) | 5 parts |
| Carbon black (particle size 40 mμ) | 10 parts |
| α-Al$_2$O$_3$ (particle size 0.2 μm) | 3 parts |
| Myristic acid | 1 part |
| Stearic acid | 1 part |
| Butyl stearate | 1 part |
| Cyclohexanone | 100 parts |
| Methyl ethyl ketone | 100 parts |
| Toluene | 100 parts |

After the composition described above was kneaded and dispersed, 5 parts of Coronate L, a polyisocyanate compound, produced by Nippon Polyurethane Industry Co., Ltd., was added, and the mixture was coated on a polyethylene terephthalate support of 14 μm in thickness to a dry film thickness of 4 μm.

Examples 1 through 7 and Comparative Examples 6 through 9

Multiple layered video tapes were prepared as follows:

<Magnetic paint for first magnetic layer (lower layer)>

Co-containing FeOx
(for the Hc, BET value and x value,
  see Table 2 below)                                        100 parts
Sulfonate modified vinyl chloride-vinyl
acetate-vinyl alcohol copolymer
(MR110, produced by Nippon Zeon)                              6 parts
Potassium sulfonate modified polyurethane
(UR-8300, produced by Toyobo Corporation)                   11 parts
Carbon black (particle size 20 mµ)                           7 parts
Stearic acid                                                 1 part
Oleic acid                                                   1 part
Butyl stearate                                               1 part
Cyclohexanone                                              100 parts
Methyl ethyl ketone                                        100 parts
Toluene                                                    100 parts

Magnetic paint for second magnetic layer (upper layer)

| | |
|---|---|
| Co-containing FeOx (for the Hc, BET value and x value, see Table 2 below) | 100 parts |
| Sulfonate modified vinyl chloride-vinyl acetate-vinyl alcohol copolymer (MR110, produced by Nippon Zeon) | 8 parts |
| Potassium sulfonate modified polyurethane (UR-8300, produced by Toyobo Corporation) | 6 parts |
| $\alpha$-A$\ell_2$O$_3$ (particle size 0.2 $\mu$m) | 3 parts |
| Carbon black (particle size 40 m$\mu$) | 0.5 part |
| Myristic acid | 1 part |
| Stearic acid | 1 part |
| Butyl stearate | 1 part |
| Cyclohexanone | 100 parts |
| Methyl ethyl ketone | 100 parts |
| Toluene | 100 parts |

After the first and second magnetic paints were each kneaded and dispersed, 5.0 parts of Coronate L, produced by Nippon Polyurethane Industry Co., Ltd., a polyisocyanate compound, was added, and the mixtures were coated on a polyethylene terephthalate support of 14.3 $\mu$m in thickness to a dry film thickness of 3.0 $\mu$m for the first magnetic layer or 0.5 $\mu$m for the second magnetic layer by the wet-on-wet simultaneous coating method to prepare 1/2 inch (1.25 cm) video tapes.

The following backcoat (BC) layer coating composition was coated on the face opposite to the magnetic layer side to a dry thickness of 1.0 $\mu$m.

```
Carbon black

(R-1035, produced by Colombia Carbon)          60 parts

Nitrocellulose                                  30 parts

Potassium sulfonate containing polyurethane resin

(UR-8300, produced by Toyobo Corporation)       20 parts

Coronate L (produced by Nippon Polyurethane

Industry Co., Ltd.)                             13 parts

Cyclohexanone                                  800 parts

Methyl ethyl ketone                           1000 parts

Toluene                                        800 parts
```

For each tape described above, X-ray diffraction spectrometry was conducted by the methods described in Figures 4 and 5 using a CuKα ray (wavelength = 1.5405 Å). The diffraction peak positions and their half-value widths are given in Tables 1 and 2, respectively, along with the performance of each tape as determined as follows.

(a) Transfer property

Determined as directed under "7-9. Transfer Effects" in the VHS Video Cassette System Specifications of JVC. Specific procedures are as follows:
(1) Proceed with a strip of tape $T_1$ on which a 1 kHz sine wave signal exceeding the specified recording level by 10 dB has been recorded at the reference recording bias current and 10 strips of tape $T_2$ with no signal. Wind them firmly alternatively around the reel spindle R as illustrated in Figure 11.
(2) Keep them standing at a temperature of 30°C and a relative humidity of 65 ±5% for 24 hours.
(3) Determine the difference in dB unit between the reproduced level in the $T_1$ portion with recorded signal and the output level in the $T_2$ portion with transferred signal.

(b) C-S/N (chromatic S/N)

Determined using a Shibasoku 925 D/l color video noise meter on an HR-S7000 deck, produced by Victor Company of Japan. Results are expressed in values relative to the reference tape in dB unit at the signal frequency of 629 kHz.

(c) L-S/N (luminescence S/N)

Determined using the Shibasoku noise meter 925 D/l described above at the signal frequency of 6 MHz. High pass filtering was conducted at 4.2 MHz, and low pass filtering at 10 kHz. The VTR used was JVC HR-D120.

(d) Running durability (RF output decline)

The tapes were subjected to 50 and 100 cycles of recording and reproduction under normal temperature, normal humidity conditions, and the RF output differences between the first, 50th and 100th passes were determined in dB unit. RF output was measured using the color video noise meter described above at 6 MHz.

(e) Rubbing noise

Determined as follows: (i) Set the measuring system a reproducing condition while keeping the tape not

9

running, and measure the system noise using a spectrum analyzer. (ii) Perform 10 cycles of data reproduction with the sample tape for 1 minute, and measure the rubbing noise using a spectrum analyzer. (iii) Read the noise level near 8 MHz on the noise spectrum, and average the read values as to 10 times of the measurment to determine the rubbing noise. The rubbing noise is expressed as a relative value in dB with respect to the system noise as 0 dB. Measuring condition were 25°C and 10%RH.

Table 1

| | Co-containing FeOx | | | X-ray diffraction property | | Transfer property | C-S/N | L-S/N | Running durability in RF output decline (dB) | | Rubbing noise |
|---|---|---|---|---|---|---|---|---|---|---|---|
| | Hc (Oe) | BET value (m²/g) | Value of x | Peak position, 2θ (°) | Half-value width d (°) | (dB) | (dB) | (dB) | After 50 passes | After 100 passes | (dB) |
| Comparative Example 1 | 700 | 40 | 1,476 | 62.89 | 0.437 | >45 | 0 | 0 | 0 | −0.4 | 2.5 |
| Comparative Example 2 | 650 | 30 | 1,370 | 62.56 | 0.458 | 28 | +4.2 | −3.1 | −0.2 | −0.7 | 2.0 |
| Comparative Example 3 | 850 | 50 | 1,455 | 62.85 | 0.427 | >45 | −1.6 | +1.9 | 0 | −0.5 | 2.0 |
| Comparative Example 4 | 650 | 35 | 1,385 | 62.64 | 0.457 | 34 | +3.8 | −4.5 | −0.2 | −0.7 | 1.5 |
| Comparative Example 5 | *-1 | | | 62.75 | 0.478 | >45 | +2.5 | −0.8 | −0.1 | −0.4 | 9.5 |

*-1: In Comparative Example 5, a 4:6 mixture of the magnetic powder of Comparative Example 2 and the magnetic powder of Comparative Example 3 was used as the magnetic powder.

EP 0 443 523 B1

From the results given in Table 1, the following are evident with respect to a tape having a single magnetic layer.

(1) When $2\theta$ is great ($2\theta \geqq 62.80°$), an excellent transfer property and a good luminescence S/N (L-S/N) are obtained.

(2) When $2\theta$ is small ($2\theta \leqq 62.70°$), a good chromatic S/N (C-S/N) is obtained, but the L-S/N and transfer property are poor.

(3) When $2\theta$ is in a particular range (for example, $2\theta = 62.75°$), the transfer property, C-S/N and L-S/N are relatively good, though the sliding noise showed significant deterioration.

(4) A single magnetic layer offers relatively good running durability.

Table 2

| | Lower layer Hc (Oe) | Lower layer BET (m²/g) | Lower layer Value of x | Upper layer Hc (Oe) | Upper layer BET (m²/g) | Upper layer Value of x | Lower layer 2θ (°) | Lower layer d (°) | Upper layer 2θ (°) | Upper layer d (°) | Multiple layer 2θ (°) | Multiple layer d (°) | Transfer property (dB) | C-S/N (dB) | L-S/N (dB) | Running durability After 50 passes | Running durability After 100 passes | Rubbing noise (dB) |
|---|---|---|---|---|---|---|---|---|---|---|---|---|---|---|---|---|---|---|
| Example 1 | 650 | 30 | 1.417 | 750 | 45 | 1.476 | 62.75 | 0.465 | 62.88 | 0.290 | 62.80 | 0.520 | >45 | +3.6 | +1.2 | -0.2 | -0.4 | 2.5 |
| Example 2 | 650 | 30 | 1.417 | 750 | 45 | 1.417 | 62.75 | 0.465 | 62.75 | 0.460 | 62.75 | 0.460 | >45 | +3.8 | +1.8 | -0.1 | -0.5 | 2.5 |
| Example 3 | 650 | 30 | 1.417 | 750 | 45 | 1.345 | 62.75 | 0.465 | 62.52 | 0.380 | 62.67 | 0.500 | >45 | +3.5 | +1.9 | -0.1 | -0.5 | 2.0 |
| Comparative Example 6 | 650 | 30 | 1.476 | 750 | 45 | 1.467 | 62.88 | 0.400 | 62.88 | 0.290 | 62.88 | 0.473 | >45 | +3.2 | +1.2 | -0.8 | -2.9 | 10.5 |
| Example 4 | 650 | 30 | 1.476 | 750 | 45 | 1.417 | 62.88 | 0.400 | 62.75 | 0.460 | 62.79 | 0.541 | >45 | +3.1 | +1.2 | -0.2 | -0.6 | 3.0 |
| Example 5 | 650 | 30 | 1.476 | 750 | 45 | 1.345 | 62.88 | 0.400 | 62.52 | 0.380 | 62.64 | 0.510 | >45 | +3.0 | +1.4 | 0 | -0.3 | 3.0 |
| Example 6 | 650 | 30 | 1.370 | 750 | 45 | 1.467 | 62.52 | 0.380 | 62.88 | 0.290 | 62.75 | 0.581 | >45 | +4.2 | +1.8 | 0 | -0.3 | 2.5 |
| Example 7 | 650 | 30 | 1.370 | 750 | 45 | 1.417 | 62.52 | 0.380 | 62.75 | 0.460 | 62.70 | 0.600 | >45 | +4.4 | +1.6 | -0.3 | -0.7 | 2.5 |
| Comparative Example 7 | 650 | 30 | 1.370 | 750 | 45 | 1.345 | 62.52 | 0.380 | 62.52 | 0.380 | 62.52 | 0.490 | 28 | +3.6 | +1.8 | -0.2 | -0.4 | 12.5 |
| Comparative Example 8 | 600 | 35 | 1.476 | 600 | 35 | 1.476 | 62.88 | 0.400 | 62.88 | 0.400 | 62.88 | 0.400 | 30 | +3.6 | -3.1 | -0.5 | -3.1 | 11.0 |
| Comparative Example 9 | 750 | 45 | 1.345 | 750 | 45 | 1.345 | 62.52 | 0.380 | 62.52 | 0.380 | 62.52 | 0.380 | 32 | 0 | +1.9 | -0.7 | -2.7 | 12.0 |

From the results given in Table 2, it is evident that in the case of a multiple layer unlike a single magnetic layer, good properties are obtained when 2θ is in the range of the present invention between 62.60° and 62.80°, but when 2 is too low, the transfer property and rubbing noise are poor, and when 2 is too high, the running durability and rubbing noise deteriorate. Also, in Comparative Examples 8 and 9, the obtained performance was very poor, which may also attributable to too low a d value.

Examples 8 through 14 and Comparative Examples 10 through 12

Then, the half-value width d was considered. The thickness of the upper and lower magnetic layers was altered as shown in Table 3 below in the sample of Example 6, which showed particularly good performance among the samples obtained in Examples 1 through 7. The following results were obtained.

Table 3

| | Layer thickness (µm) | | X-ray diffraction property of multiple layer | | Transfer property (dB) | C-S/N (dB) | L-S/N (dB) | Running durability in RF output decline (dB) | | Rubbing noise (dB) |
|---|---|---|---|---|---|---|---|---|---|---|
| | Upper layer | Lower layer | 2θ (°) | d (°) | | | | After 50 passes | After 100 passes | |
| Example 8 | 0.5 | 3.0 | 62.64 | 0.510 | >45 | +4.2 | +1.8 | 0 | −0.3 | 2.5 |
| Example 9 | 0.3 | 3.0 | 62.62 | 0.480 | >45 | +4.0 | +1.8 | −0.1 | −0.4 | 2.5 |
| Comparative Example 10 | 0.1 | 3.0 | 62.60 | 0.420 | 38 | +4.2 | +0.8 | −0.8 | −2.9 | 16.0 |
| Example 10 | 0.5 | 4.0 | 62.69 | 0.525 | >45 | +3.8 | +1.6 | −0.2 | −0.5 | 3.0 |
| Example 11 | 0.5 | 2.0 | 62.74 | 0.572 | >45 | +4.0 | +2.0 | −0.1 | −0.6 | 3.0 |
| Comparative Example 11 | 0.5 | 1.0 | 62.80 | 0.610 | 34 | +3.6 | +1.2 | −1.4 | −6.2 | 7.0 |
| Example 12 | 0.8 | 3.0 | 62.69 | 0.548 | >45 | +3.8 | +1.6 | −0.1 | −0.4 | 2.5 |
| Example 13 | 1.0 | 3.0 | 62.76 | 0.549 | >45 | +3.8 | +1.4 | 0 | −0.5 | 3.0 |
| Comparative Example 12 | 1.2 | 3.0 | 62.81 | 0.550 | 28 | +1.9 | −2.0 | −0.7 | −3.2 | 12.4 |
| Example 14 | 0.5 | 1.5 | 62.75 | 0.549 | >45 | +4.0 | +1.8 | −0.2 | −0.7 | 2.5 |

From the results given in Table 3, it is evident that when the d value is too low, the transfer property, the running durability and particularly the rubbing noise are poor, and when d is too high, particularly the running durability was deteriorated. The thickness of the magnetic layer affected d; it is preferable that the upper layer have a thickness of 0.1 to 1.0 μm and the lower layer have a thickness exceeding 1.0 μm.

Examples 15 and 16 and Comparative Examples 13 through 16

Next, the magnetic powders used in Comparative Examples 3 and 4 above were mixed, followed by the same procedure as in Example 1 to prepare a multiple layered tape.

The obtained results are given in Table 4, from which it is evident that the d value as well significantly affects the properties.

Table 4

| Mixing ratio | Lower layer | | Upper layer | | X-ray diffraction property of multiple layer | | Transfer property | C-S/N | L-S/N | Running durability in RF output decline (dB) | | Rubbing noise |
|---|---|---|---|---|---|---|---|---|---|---|---|---|
| | Used in 3 (Comparative) | Used in 4 (Comparative) | Used in 3 (Comparative) | Used in 4 (Comparative) | $2\theta$ (°) | d (°) | (dB) | (dB) | (dB) | After 50 passes | After 100 passes | (dB) |
| Comparative Example 13 | 5 | 5 | 5 | 5 | 62.74 | 0.430 | >45 | +3.2 | +0.2 | -0.9 | -3.2 | 14.0 |
| Comparative Example 14 | 8 | 2 | 5 | 5 | 62.80 | 0.440 | >45 | +3.1 | +0.3 | -0.7 | -2.8 | 13.0 |
| Comparative Example 15 | 2 | 8 | 5 | 5 | 62.68 | 0.435 | >45 | +3.2 | +0.4 | -1.5 | -3.9 | 10.0 |
| Comparative Example 16 | 5 | 5 | 8 | 2 | 62.70 | 0.450 | >45 | +3.2 | +0.5 | -0.3 | -2.2 | 16.0 |
| Example 15 | 5 | 5 | 2 | 8 | 62.66 | 0.479 | >45 | +3.0 | +0.7 | -0.3 | -0.6 | 2.5 |
| Example 16 | 2 | 8 | 2 | 8 | 62.75 | 0.520 | >45 | +2.9 | +0.8 | -0.2 | -0.5 | 3.0 |

Examples 17 and 18 and Comparative Examples 17 and 18

Also found was that when the magnetic layer described above was formed in 3 layers as shown in Table 5 below. The layer thickness was 0.3 $\mu$m for the uppermost layer, 0.7 $\mu$m for the intermediate layer, and 2.4 $\mu$m for the lower layer. Good properties as shown in Table 5 are obtained by setting $2\theta$ and d in a constitution of an upper layer, an intermediate layer and a lower layer in accordance with the present invention.

Table 5

| | Lower layer | | | Intermediate layer | | | Upper layer | | | Lower layer | | Interlayer | | Upper layer | | Triple layer | |
|---|---|---|---|---|---|---|---|---|---|---|---|---|---|---|---|---|---|
| | Hc (Oe) | BET (m²/g) | Value of x | Hc (Oe) | BET (m²/g) | Value of x | Hc (Oe) | BET (m²/g) | Value of x | 2θ (°) | d (°) | 2θ (°) | d (°) | 2θ (°) | d (°) | 2θ (°) | d (°) |
| Example 17 | 650 | 30 | 1.370 | 600 | 35 | 1.417 | 750 | 45 | 1.476 | 62.75 | 0.465 | 62.78 | 0.420 | 62.88 | 0.290 | 62.80 | 0.520 |
| Example 18 | 650 | 30 | 1.370 | 600 | 35 | 1.417 | 750 | 45 | 1.417 | 62.75 | 0.465 | 62.78 | 0.420 | 62.75 | 0.460 | 62.75 | 0.460 |
| Comparative Example 17 | 650 | 30 | 1.467 | 600 | 35 | 1.476 | 750 | 45 | 1.467 | 62.88 | 0.400 | 62.88 | 0.58 | 62.88 | 0.290 | 62.88 | 0.473 |
| Comparative Example 18 | 650 | 30 | 1.370 | 600 | 35 | 1.347 | 750 | 45 | 1.345 | 62.52 | 0.380 | 62.52 | 0.400 | 62.52 | 0.380 | 62.52 | 0.490 |

Table 5 (Cont'd)

| | Transfer property (dB) | C-S/N (dB) | L-S/N (dB) | Running durability in RF output decline (dB) | | Rubbing noise (dB) |
|---|---|---|---|---|---|---|
| | | | | After 50 passes | After 100 passes | |
| Example 17 | >45 | +4.5 | +2.5 | 0 | −0.2 | 1.5 |
| Example 18 | >45 | +4.8 | +2.8 | 0 | −0.3 | 1.5 |
| Comparative Example 17 | >45 | +4.4 | +2.4 | −0.5 | −2.0 | 8.5 |
| Comparative Example 18 | 30 | +3.8 | +2.0 | −0.6 | −2.2 | 8.0 |

## Claims

1. A magnetic recording medium comprising a support and a magnetic recording layer unit provided thereon, said unit including

   a first layer being arranged at the position closest to said support and having a binder and a first magnetic powder comprising an iron oxide represented by FeOx in which x has a value of from 1.33 to 1.50; and

   a second layer being arranged at the furthest position from said support and having a binder and a second magnetic powder comprising an iron oxide represented by FeOx, in which x has a value of from 1.33 to 1.50,

   wherein a property of said first magnetic powder is different from that of said second magnetic powder,

   so that the X-ray diffraction spectrum of said magnetic recording layer unit has a peak within the range of Bragg angle 2θ of from 62.60 degree to 62.80 degree and said peak of X-ray diffraction spectrum has a half value width within the range of from 0.460 degree to 0.600 degree.

2. The recording medium of claim 1, wherein said first magnetic powder is different from said second magnetic powder in the value of said x thereof.

3. The recording medium of claim 2, wherein said first magnetic powder has a value of x of from 1.34 to 1.44 and said second magnetic powder has a value of x of from 1.45 to 1.48.

4. The recording medium of claim 3, wherein said first magnetic powder has a value of x of from 1.36 to 1.40.

5. The recording medium of claim 1, wherein said first magnetic powder is different from said second magnetic powder in the coersive force thereof.

6. The recording medium of claim 1, wherein said first magnetic powder is different from said second magnetic powder in the specific surface area represented by BET value thereof.

7. The recording medium of claim 1, wherein said first magnetic powder is different from said second magnetic powder in the kind of an element added thereto.

8. The recording medium of claim 1, wherein said first magnetic powder is different from said second magnetic powder in the amount of an element added thereto.

9. The recording medium of claim 1, wherein said X-ray diffraction spectrum of said magnetic recording layer unit has a peak within the range of Bragg angle of from 62.60 degree to 62.77 degree and said half value width of said peak is within the range of from 0.740 degree to 0.590 degree.

10. The recording medium of claim 9, wherein said X-ray diffraction spectrum of said magnetic recording layer unit has a peak within the range of Bragg angle of from 62.62 degree to 62.75 degree and said half value width of said peak is within the range of from 0.745 degree to 0.580 degree.

## Patentansprüche

1. Magnetisches Aufzeichnungsmaterial mit einem Träger und einer darauf vorgesehenen magnetischen Aufzeichnungsschichteinheit, wobei diese Einheit

   eine an einer Stelle nebst dem Schichtträger angeordnete erste Schicht mit einem Bindemittel und einem ersten magnetischen Pulver in Form eines durch FeOx mit x gleich einem Wert von 1,33 bis 1,50 darstellbaren Eisenoxids und

   eine an einer von Schichtträger am weitesten entfernten Stelle vorgesehene zweite Schicht mit einem Bindemittel und einem zweiten magnetischen Pulver in Form eines durch FeOx mit x gleich einem Wert von 1,33 bis 1,50 darstellbaren Eisenoxids umfaßt

   und wobei sich das erste magnetische Pulver und das zweite magnetische Pulver in einer Eigenschaft derart unterscheiden, daß das Röntgenstrahlenbeugungsspektrum der magnetischen Aufzeichnungsschichteinheit einen Peak im Bereich des Bragg-Winkels 2θ von 62,60 Grad bis 62,80 Grad aufweist und der Peak des Röntgenstrahlenbeugungsspektrums eine Halbwertsbreite im Bereich von 0,460 Grad bis 0,600 Grad besitzt.

2. Aufzeichnungsmaterial nach Anspruch 1, wobei sich das erste magnetische Pulver und das zweite magnetische Pulver in ihrem Wert x unterschieden.

3. Aufzeichnungsmaterial nach Anspruch 2, wobei das erste magnetische Pulver einen Wert x von 1,34 bis 1,44 und das zweite magnetische Pulver einen Wert x von 1,45 bis 1,48 aufweisen.

4. Aufzeichnungsmaterial nach Anspruch 3, wobei das erste magnetische Pulver einen Wert x von 1,36 bis 1,40 aufweist.

5. Aufzeichnungsmaterial nach Anspruch 1, wobei sich das erste magnetische Pulver und das zweite magnetische Pulver in ihrer Koerzitivkraft unterscheiden.

6. Aufzeichnungsmaterial nach Anspruch 1, wobei sich das erste magnetische Pulver und das zweite magnetische Pulver in ihrer durch ihren BET-Wert dargestellten spezifischen Oberfläche unterscheiden.

7. Aufzeichnungsmaterial nach Anspruch 1, wobei sich das erste magnetische Pulver und das zweite magnetische Pulver in der Art eines zugesetzten Elements unterscheiden.

8. Aufzeichnungsmaterial nach Anspruch 1, wobei sich das erste magnetische Pulver und das zweite magnetische Pulver in der Menge eines zugesetzten Elements unterscheiden.

9. Aufzeichnungsmaterial nach Anspruch 1, wobei das Röntgenstrahlenbeugungsspektrum der magentischen Aufzeichnungsschicht einen Peak im Bragg-Winkelbereich von 62,60 Grad bis 62,77 Grad aufweist und die Halbwertsbreite des Peaks im Bereich von 0,740 Grad bis 0,590 Grad liegt.

10. Aufzeichnungsmaterial nach Anspruch 9, wobei das Röntgenstrahlenbeugungsspektrum der magnetischen Aufzeichnungsschichteinheit einen Peak im Bragg-Winkelbereich von 62,62 Grad bis 62,75 Grad aufweist und die Halbwertsbreite des Peaks im Bereich von 0,745 Grad bis 0,580 Grad liegt.


**Revendications**

1. Un milieu d'enregistrement magnétique comportant un support et un ensemble de couches d'enregistrement magnétique prévu sur celui-ci, ledit ensemble comportant
une première couche disposée en une position la plus voisine dudit support et comportant un liant et une première poudre magnétique comportant un oxyde de fer représenté par FeOx, x ayant une valeur de 1,33 à 1,50 ; et
une seconde couche disposée en une position la plus éloignée dudit support et comportant un liant et une seconde poudre magnétique comportant un oxyde de fer représenté par FeOx, x ayant une valeur de 1,33 à 1,50,
une propriété de ladite première poudre magnétique étant différente de celle de ladite seconde poudre magnétique,
de telle sorte que le spectre de diffraction aux rayons X dudit ensemble de couches d'enregistrement magnétique présente une crête dans la plage de l'angle de Bragg 2 $\theta$ de 62,60 degrés à 62,80 degrés et que ladite crête du spectre de diffraction aux rayons X présente une largeur de demi-valeur dans la plage de 0,460 degré à 0,600 degré.

2. Le milieu d'enregistrement de la revendication 1, dans lequel ladite première poudre magnétique est différente de ladite seconde poudre magnétique par la valeur de son x.

3. Le milieu d'enregistrement de la revendication 2, dans lequel ladite première poudre magnétique présente une valeur de x de 1,33 à 1,44 et ladite seconde poudre magnétique présente une valeur de x de 1,45 à 1,48.

4. Le milieu d'enregistrement de la revendication 3, dans lequel ladite première poudre magnétique présente une valeur de x de 1,36 à 1,40.

5. Le milieu d'enregistrement de la revendication 1, dans lequel ladite première poudre magnétique est différente de ladite seconde poudre magnétique par sa force coercitive.

6. Le milieu d'enregistrement de la revendication 1, dans lequel ladite première poudre magnétique est différente de ladite seconde poudre magnétique par l'aire de surface spécifique représentée par sa valeur BET.

7. Le milieu d'enregistrement de la revendication 1, dans lequel ladite première poudre magnétique est différente de ladite seconde poudre magnétique par le type d'un élément qui lui est ajouté.

8. Le milieu d'enregistrement de la revendication 1, dans lequel ladite première poudre magnétique est différente de ladite seconde poudre magnétique par la quantité d'un élément qui lui est ajouté.

9. Le milieu d'enregistrement de la revendication 1, dans lequel ledit spectre de diffraction aux rayons X dudit ensemble de couches d'enregistrement magnétique présente une crête dans la plage de l'angle de Bragg de 62,60 degrés à 62,77 degrés et ladite largeur de demi-valeur de ladite crête est dans la plage de 0,740 degré à 0,590 degré.

10. Le milieu d'enregistrement de la revendication 9, dans lequel ledit spectre de diffraction aux rayons X dudit ensemble de couches d'enregistrement magnétique présente une crête dans la plage de l'angle de Bragg de 62,62 degrés à 62,75 degrés et ladite largeur de demi-valeur de ladite crête est dans la plage de 0,745 degré à 0,580 degré.

# F I G. I

# FIG. 2

# FIG. 3

# F I G. 4

# F I G. 5

# F I G. 6

# F I G. 7

# F I G. 8

# F I G. 9

# FIG. 10(A)  FIG.10(B)  FIG.10(C)

# FIG. 11